# EUROPEAN PATENT SPECIFICATION

(11) **EP 1 627 569 B1**
(45) Date of publication and mention of the grant of the patent: **21.03.2007**
(21) Application number: 04019787.3
(22) Date of filing: 20.08.2004
(51) Int. Cl.: A23G 3/00, A23G 1/00

(54) **Chocolate confectionery comprising spun cotton candy**
Zuckerwatte enthaltende Schokoladenware
Confiseries au chocolat comprenant du sucre en filaments

(43) Date of publication of application: 22.02.2006
(73) Proprietor: Kraft Foods R & D, Inc. Zweigniederlassung München, 81737 München (DE)
(72) Inventor: Löser, Ulrich, 82054 Sauerlach (DE)
(74) Representative: Morf, Jan Stefan

(56) References cited:
- EP-A- 0 321 449
- EP-A- 0 646 650
- WO-A-00/13680
- FR-A- 2 757 352
- US-A- 3 615 671

## Description

### FIELD OF THE INVENTION

The present invention relates to chocolate confectionery comprising spun cotton candy and processes for making same.

### BACKGROUND OF THE INVENTION

It is known that chocolate confectionery contains a large amount of regular sugar which makes the product cheap because sugar is readily available at a low price. Furthermore, the higher the proportion of sugar content versus fat content, the less calories are produced on consumption. Finally, sugar supports the development of flavor and serves as a flavor enhancer.

However, if the sugar content is raised above a certain level, the melting properties and mouthfeel on consumption of the chocolate confectionery, which are directly related to the fat content of the product, are affected. Furthermore, if too much sugar is used, the product becomes too sweet and becomes less and less attractive.

The use of cotton candy in powdered or compacted form is known from FR 2 757 352.

Therefore, it is the object of the present invention to provide a chocolate confectionery which has a large sugar content and nevertheless displays an attractive melting behaviour and mouthfeel on consumption and is acceptably sweet, i.e. is not too sweet.

### SUMMARY OF THE INVENTION

The problem is solved by chocolate confectionery which comprises spun cotton candy, wherein the chocolate confectionery is completely or partly covered with a layer of spun cotton candy or wherein the chocolate confectionery contains the spun cotton candy as a separate filling layer, as individual flat pieces or as separate little balls.

In one embodiment of the invention, part of the confection sugar in the chocolate confectionery is replaced by spun cotton candy.

In a preferred embodiment, spun cotton candy is evenly distributed within the chocolate confectionery.

The chocolate confectionery is preferably a chocolate tablet, a chocolate bar or a praline containing a creamy filling.

### BRIEF DESCRIPTION OF THE DRAWINGS

- Fig. 1: is a flow chart illustrating the process for preparing the chocolate confectionery of the present invention;
- Fig. 2 and 3: illustrate the process of converting spun cotton candy into flat mats;
- Fig. 4: illustrates an extrusion process for making cotton candy single filament pieces;
- Fig. 5: illustrates the principle of replacing the sugar share by a cotton-candy-based substitute;
- Fig. 6: illustrates the process of the invention for preparing chocolate containing flat individual pieces of cotton candy;
- Fig. 7: illustrates the process of the invention for preparing chocolate covered by cotton candy matts;
- Fig. 8: illustrates the process of the invention for preparing chocolate containing a cotton candy layer; and
- Fig. 9: illustrates the process of the invention for preparing chocolate the surface of which is only partly covered at the margin with a cotton candy layer having a window on the top of the chocolate.

### DETAILED DESCRIPTION OF THE INVENTION

The main aspect of the present invention relates to the combination of chocolate and spun cotton candy for producing novel chocolate confectionery.

Starting from a common chocolate confectionery recipe having a high sugar content and leading to very sweet product, it is preferred to replace a certain percentage of the regular confection sugar by spun cotton candy. In general, it is preferred that no more than about 40% by weight of the regular sugar is replaced by spun cotton candy. The spun sugar is blended within the chocolate mass, but remains discernable. Therefore, the fat content of the remaining chocolate mass increases and leads to a noticeable change in melting, i.e. an improved mouthfeel, and the product is less sweet. In addition, the spun sugar generates on consumption a crispy or candy-like impression.

On the other hand, starting from a common chocolate confectionery recipe which has a moderate and acceptable sweetness, it is possible to add additional spun cotton candy.

The fat content of the remaining chocolate mass and its melting behaviour and mouthfeel remain unchanged, but the product becomes cheaper because the ratio of sugar to fat has increased. In addition, the spun sugar generates the already mentioned crispy or candy-like impression.

In a specific embodiment of the present invention, layers of common chocolate confectionery may be combined with chocolate confectionery layers according to the present invention which contain spun cotton candy. For example, a chocolate confectionery can be produced in the form of a chocolate tablet which contains a top layer of common chocolate mass and a chocolate base layer which contains spun cotton candy according to the present invention.

Furthermore, it is possible to use cotton candy as a coating material. Again, the spun sugar can be used to replace part of the regular sugar or in addition to it. In the first case, the product becomes less sweet and its melting behaviour and mouthfeel is improved, whereas these properties remain unchanged in the second case but the product becomes cheaper. The coating surrounds the chocolate confectionery partly or preferably completely. The coating has the additional advantage that the chocolate confectionery is protected against heat affection.

In a further embodiment of the present invention, the spun sugar is used as a filling material. If the chocolate mass remains unchanged and the spun cotton candy is used as an additional filling material, the fat content of the outer chocolate mass remains unchanged as well as its melting properties and mouthfeel. However, the product becomes cheaper and generates the crispy or candy-like impression.
If, as an alternative, the spun sugar replaces part of the regular sugar in the recipe, the melting behaviour of the outer chocolate mass improves as a result of the increased fat content and the mouthfeel of the product becomes more attractive. Also in this case, the crispy or candy-like impression is generated.

In the case of spun cotton candy fillings or coatings the consumer experiences two discernable taste perceptions, one associated with melting of the chocolate and one associated with the special sweetness of the spun cotton candy. However, the two discernable taste perceptions support each other and lead to a new and different product impression.

Spun cotton candy is a widespread product and processes for making same are well-known. Processes and apparatuses for making spun cotton candy are for example described in U.S. Patents 3,762,846; 3,723,134; 3,930,043; 4,293,292; 5,145,687; 5,779,946; 5,939,120 and 6,284,164 and in U.S. Patent Application 2002/0192319 A1.

Many different processes for producing the products of the present invention, i.e. processes for combining the spun cotton candy with chocolate mass by coating or filling chocolate mass with spun cotton candy, are possible and illustrated below in the specific examples of the invention.

The process for preparing the chocolate confectionery of the invention differs from traditional processes in that cotton candy is added to the traditional recipe or in that part of the confection sugar is replaced by cotton candy. In both cases cotton candy is added after conching the traditional chocolate mass or the chocolate mass which has a reduced confection sugar content. Therefore, the final recipe of the chocolate confectionery according to the present invention is obtained only after conching and in some cases only after depositing the chocolate mass in the mould.

Apart from an optionally reduced confection sugar content the chocolate recipes used within the present invention are the same as the ones which are used in conventional chocolate manufacturing.

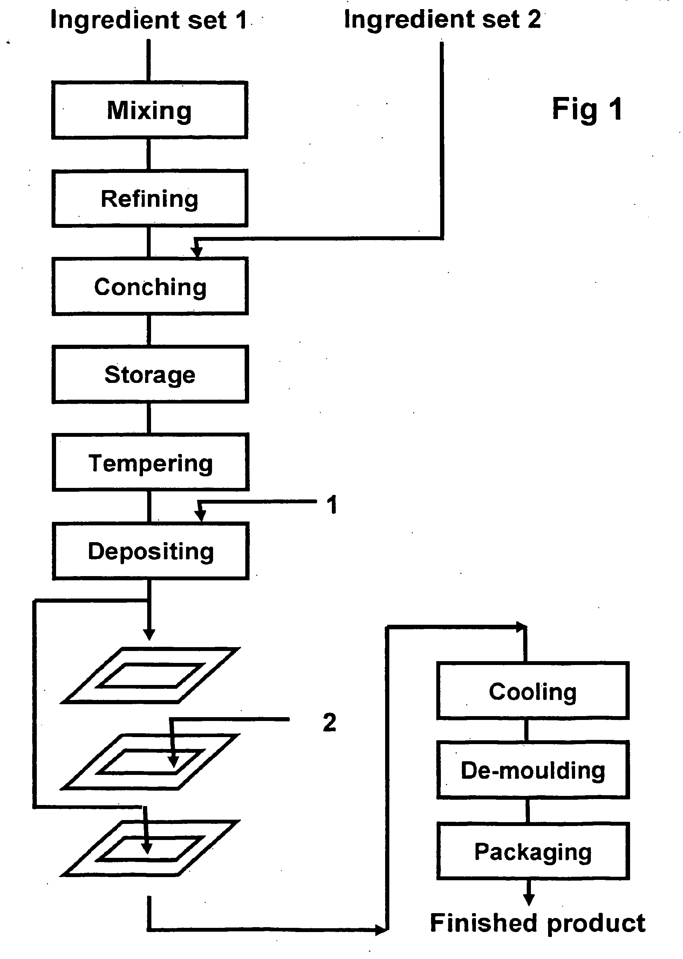

With reference to Fig. 1, the process flow follows regular chocolate manufacturing up to the depositing step without any changes. The term "ingredient set 1" includes components, e.g. crystal sugar, cocoa liquor, milk powder 1, cocoa butter, milk powder 2, milk fat, flavour, and the term "ingredient set 2" includes components, e.g. flakes (a result of milling all the components from ingredient set 1 by passing them through one or more refining machines), cocoa butter, emulsifier and flavour. Fig. 1 contains two options of adding cotton candy as examples. Two positions for the addition of cotton candy are marked with 1 on the one hand (into the hopper at the depositing stage) and marked with 2 on the other hand (into the wet shell as a mat of cotton candy). In both variants of the application, dosing and portioning are not shown. Application version 1 uses cotton candy as bulk material and application version 2 highlights the addition of one or more pieces of cotton candy to the wet shell of a chocolate mass. Subsequent process steps do not differ from regular chocolate manufacturing. Steps for controlling the recipe composition according to legal requirements are not shown in Fig. 1.

The invention will now be illustrated by specific examples which describe preferred embodiments of the present invention. They are not intended to limit the scope of the invention.

### EXAMPLES

### Example 1

### Making cotton candy

Based on commercial machine WHIRLWIND X-15R, manufacturer: Gold Medal Product Company, Cincinnati, Ohio, USA (Settings for heat range C and for heat control fine tuning 4-5) and regular crystal sugar, cotton candy was made as follows: (1) switch on the machine (2) wait until the warm-up period has finished, (3) put a wooden stick (approx. 150 mm in length and with a diameter of 1.5 mm) vertically into the air flow by hand, (4) swivel the wooden stick clockwise, coil the threads carefully onto the stick and the formed dabber. The cotton candy remains on the stick. To store cotton candy for a short period of time after manufacturing, approx. 15 min maximum, the stick is put in a holder before further processing starts.

### Making mats out of candy cotton

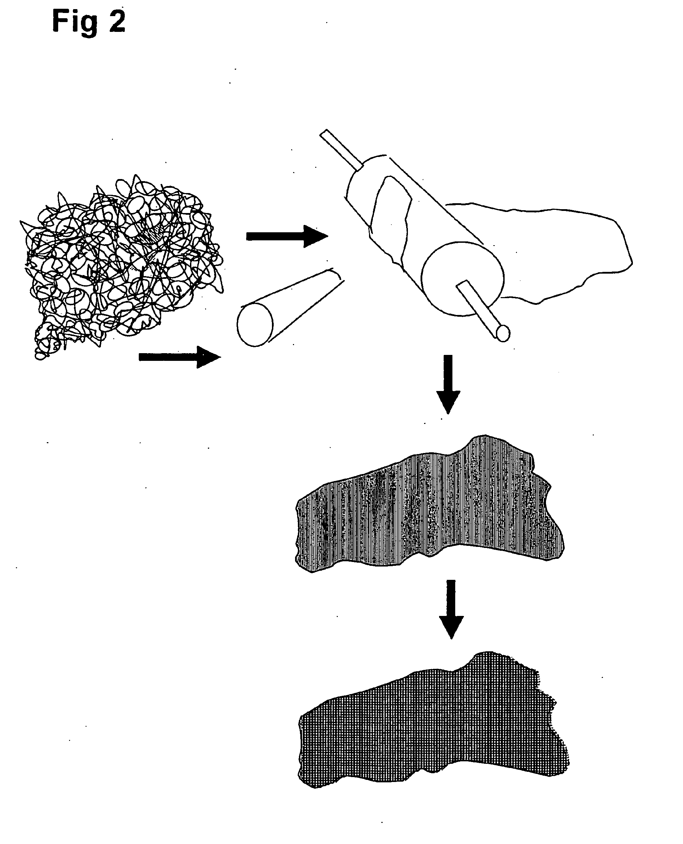

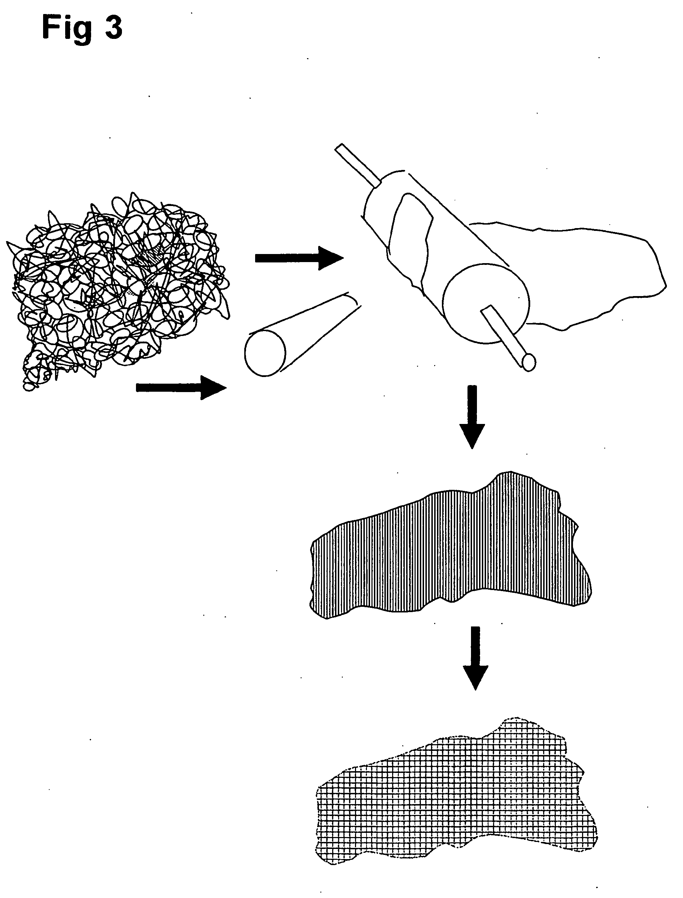

The random structure of a cotton candy dabber is converted into mat shapes manually by using a rolling pin, Fig. 2+3. The cotton candy dabber is removed from the stick by a knife and put on a table with a polished marble surfacee. Guided by the operator's hands, the rolling pin passes several times over the cotton candy material. During this process, contact pressure is increased slowly but stopped if the film becomes thinner. To exclude cracking of the film and brittle mat, the contact pressure must not exceed a certain threshold level. The mat is ready prepared for further processing.

### Example 2

### Making chocolate mass in which the sugar share is partly substituted by cotton-candy-based material

Unlike regular chocolate manufacturing, all changes only affect used chocolate mass recipes up to the conching step (see Fig. 1). Masses which are prepared for use with cotton candy have not yet achieved their final recipe formulation after conching. The technology requires an additional dosing step after conching. Depending on the chosen product design, see Examples 3-8, the recipe is completed either before, during or after mass depositing, see three recipe examples. In special cases, legal requirements might first be met thereafter.

| | Component | For 20% sugar replacement | For 40% sugar replacement |
|---|---|---|---|
| Mixer | Crystal sugar Cocoa liquor Milk powder 1 | 41.0 | 34.0 |
| | Cocoa butter Milk powder 2 Milk fat Flavour | 47.0 | 48.0 |
| | Batch | 88.0 | 82.0 |
| Conche | Flakes | 88.0 | 82.0 |
| | Cocoa butter Emulsifier Flavour | 12.0 | 18.0 |
| | | 100.0 | 100.0 |

The shape of the added sugar substitute might change, see Examples 3-8, but it is critical that the overall recipe is maintained at the end of conversion. Apart from the recipe, there are no further differences in manufacturing technology between masses without using separate sugar treatment and those with. But the masses will behave diffferently: (1) Due to a higher fat content, a mass with a reduced sugar share will have a lower viscosity. (2) Due to actual vs. traditional chocolate manufacturing technology (Fig. 1), the ratio between fat phase and sugar whilst refining and conching changes. Because of this the aroma transition from cocoa solids and cocoa fat into sugar can be influenced and technically utilized. Aroma transition effect was published by Ziegleder et al. "Neue Erkenntnisse über das Conchieren Teil II Aromauntersuchung" Süßwaren 4/2003, 16-18.

### Example 3

### Product "Mixed"

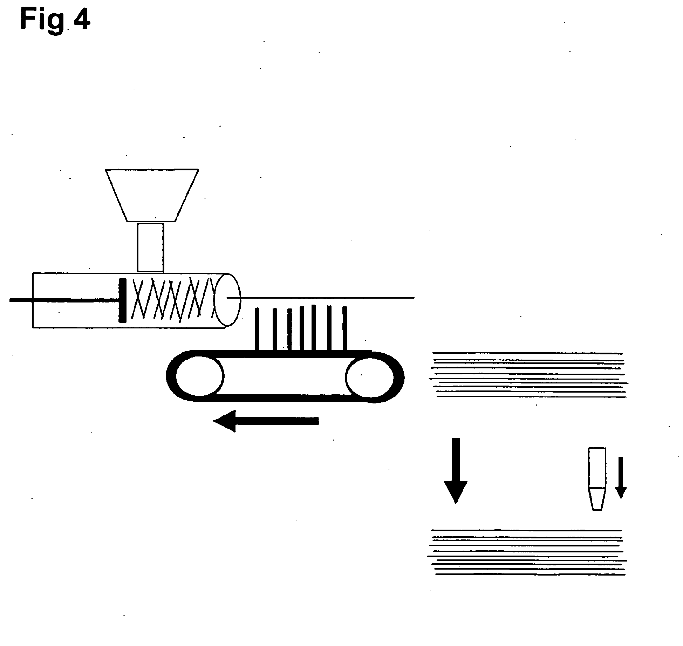

The product "Mixed" consists of one of the described masses, see recipe example below, and a processed cotton candy, see Fig. 3 and 4. Either a mat out of cotton candy with irregular structure or a bundle made from individual cotton candy threads is used to cut out very small pieces.

Preparation: According to recipe shares (tempered chocolate, containing reduced sugar share, and prepared cotton candy) both components are agitated carefully to get a homogeneous mass with or without incorporation of air.

### Recipe examples:

| Ingredient | Non-modified milk chocolate | Modification 1: 20% sugar share for replacement by candy cotton | Modfication 2: 40% sugar share for replacement by candy cotton |
|---|---|---|---|
| Crystal sugar | 47.0 | 37.6 | 28.2 |
| Cotton candy | 0 | 9.4 | 18.8 |
| Cocoa liquor Milk powder 1 Cocoa butter Milk powder 2 Milk fat Flavour Emulsifier | 53.0 | 53.0 | 53.0 |

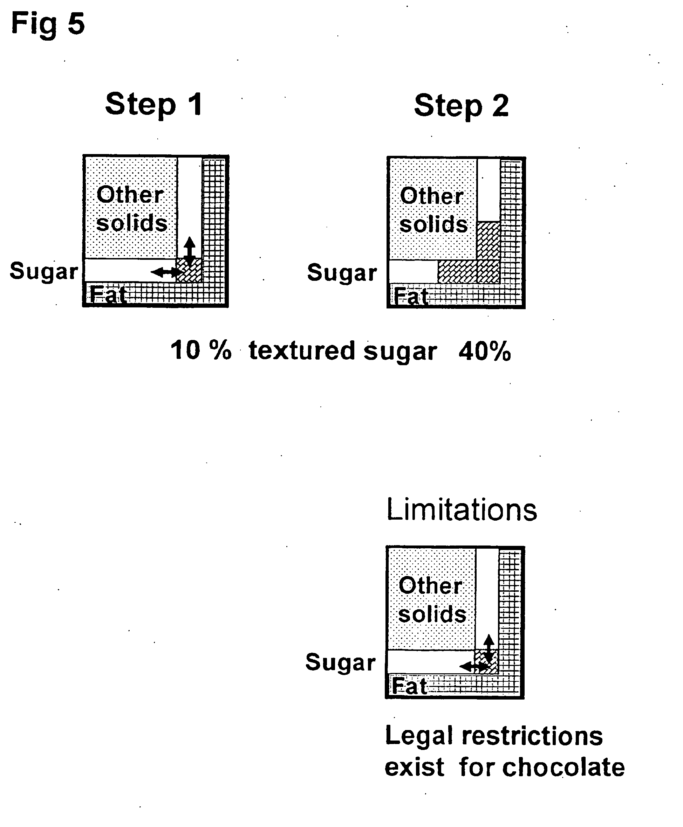

Features: If the consumer is not to notice any crunchiness or changes in mouthfeel during chewing, the particle size should be within a range close to 20-30 µm. During eating, cotton candy currently generates a crunchy perception in the mouth due to increasing particle size. Later, due to even larger particles the perception may change to coarse, which is normally not preferred by the consumer. A big advantage of solid share preparation is the ability to control sugar particle's surface and size. Furthermore, sugar particle's surface and size can be designed and created according to the product's needs to meet consumer preferences. The principle of replacing sugar share by cotton-candy-based substitute is shown in Fig. 5.

### Example 4

### Product "Each Single Piece"

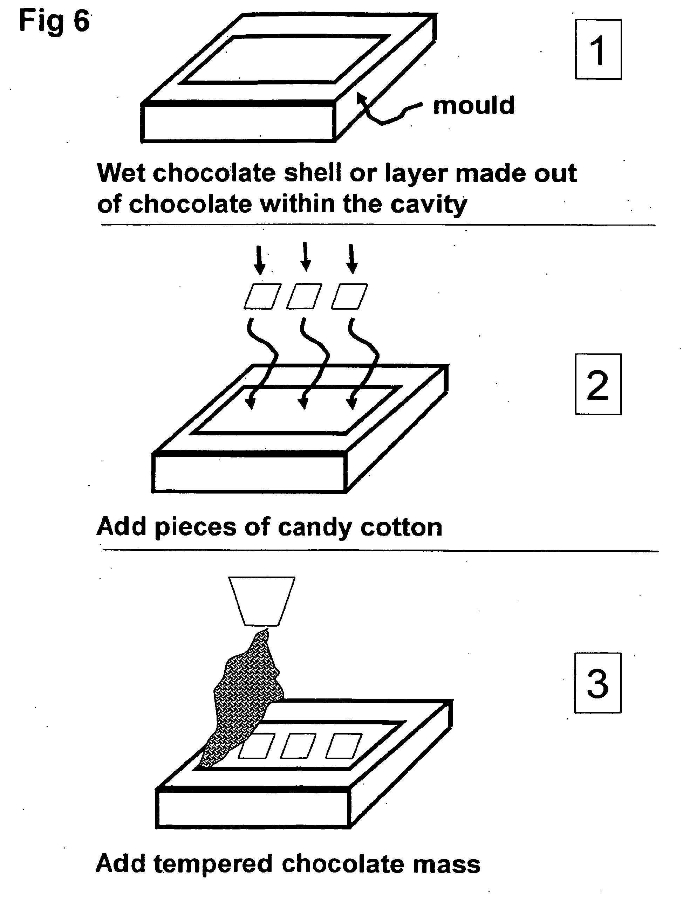

The product "Each Single Piece" consists of one of the described masses, see recipe examples, modification 1 or 2, and two of the processed cotton candies, see Fig. 3 and Fig. 6, step 2.

Preparation: According to recipe shares (tempered chocolate, containing reduced sugar share, and prepared shaped candy cotton) both components are processed separately in the following manner. Unlike Example 3, the following procedure requires multiple weighing steps to ensure share ratios as defined by the recipe. Weighing steps are not displayed in Fig. 6. Referring to Fig. 6, tempered chocolate, either modification 1 or 2, is used to make the shell, step 1. No cooling step is required. A prepared piece of preprocessed cotton candy is deposited, as seen in step 2, Fig. 6, into the wet shell. The pieces of preprocessed cotton candy are gently pressed into the wet shell such that the lower surface is completely covered by chocolate mass. Immediately thereafter, tempered bottom mass is deposited, preferably by dot depositing. The bottom can be realized either by means of scraping or gentle horizontal vibration. The cotton candy layer must be completely covered by chocolate. The process step after controlled vibration is cooling.

Features: The product generates two extreme mouthfeel sensations: On the one hand a very tender and smooth perception due to chocolate share and on the other hand crunchy or chewy perception due to the texture of the cotton candy. Small bits of cotton candy remain, which can easily dissolve between the tongue and the roof of the mouth during consumption. Unlike Example 6 there is no special need for snapping off. Consumers with dentures can eat this product easily.

### Example 5

### Product "Wrapper"

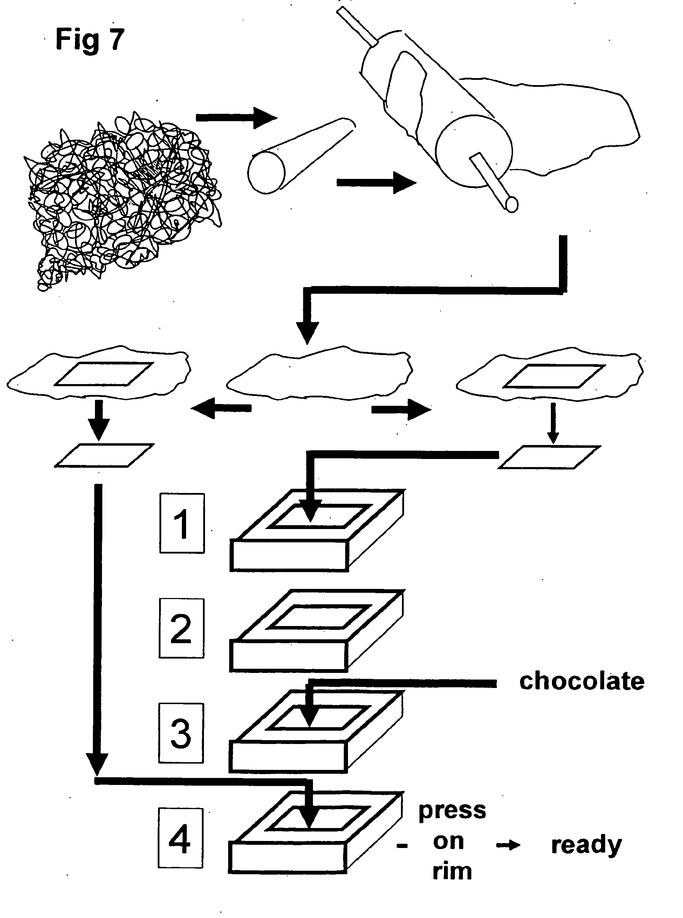

The product "Wrapper" consists of one of the described masses, see recipe example modification 1 or 2, and two pieces of the processed cotton candy, see Fig. 7.

Preparation: According to recipe shares (tempered chocolate, containing reduced sugar share, and prepared shaped cotton candy) both components are processed separately in the following manner. Unlike Example 3, the following procedure requires multiple weighing steps to ensure share ratios as defined by the recipe. Weighing steps are not displayed in Fig. 7. Referring to Fig. 7, the piece of preprocessed cotton candy is gently pressed into a cavity of the empty mould with positive-locking, step 1, Fig. 7. The overlapping rim is removed by cutting, step 2, Fig. 7. The mat of processed cotton candy is closely attached to the inside of the negative shape of the mould segment. Immediately thereafter, tempered chocolate mass is deposited, preferably by dot depositing, into the mould's cavity covered by the mat of cotton candy. To get an even distribution, the filled mould may pass through a horizontal vibration step, not shown in Fig. 7. Immediately thereafter a prepared mat of cotton candy is gently placed on the chocolate surface. The mat is pressed gently along the inside flange of the cavity covered by the mat of cotton candy. All overlapping material is cut out, not shown in Fig. 7. The process step after closing the top surface completely is cooling. Product demoulding must be carried out carefully without harming the brittle body of the product.

Features: The purpose of the product design is to deliver a product which covers chocolate with coating based on a recipe component share. Based on that idea, chocolate becomes resistant to heat damage both as a wrapped and unwrapped product. Cotton-candy-based material is hygroscopic and brittle. For that reason appropriate primary packaging including protection gas is required to maintain the texture of the cover and to avoid its separation, crumbling or disappearing. Use of primary packaging with re-closure feature may combine a preference for using small portion sizes and a need for a limited quantity in one packaging unit. The heat-resistance behavior under such conditions would last for a limited period of time only, e.g. a few hours.

### Example 6

### Product "Inside layer"

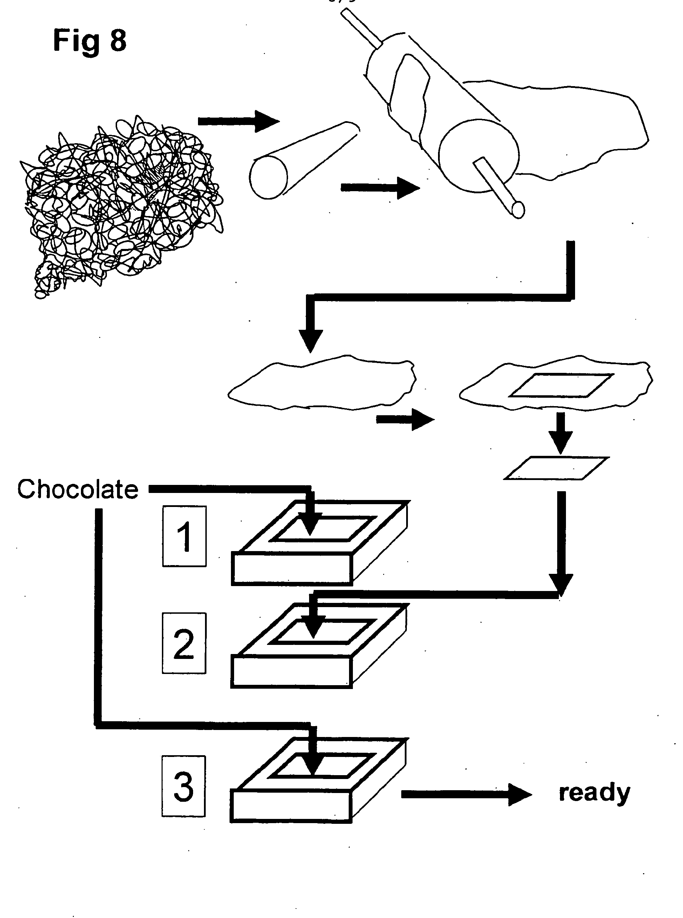

The product "Inside layer" consists of one of the described masses, see recipe examples, modification 1 or 2, and a processed cotton candy, see Fig. 7. A mat of cotton candy with irregular structure is sliced into pieces according to Fig. 8.

Preparation: According to recipe shares (tempered chocolate, containing reduced sugar share, and prepared shaped cotton candy) both components are processed separately in the following manner. Unlike example 3, the following procedure requires multiple weighing steps to ensure share ratios as defined by the recipe. Weighing steps are not displayed in Fig. 8. Referring to Fig. 8, tempered chocolate, either modification 1 or 2, is used to make the shell, step 1, Fig. 8. No cooling step is required. The preparation step to produce a piece of cotton candy, see Fig. 8, may also contain an additional step, pre-creasing, not shown, to improve cracking behaviors for tablet-like product shapes. A prepared piece of preprocessed cotton candy is deposited, as seen in step 2, Fig. 8, into the wet shell. The piece of preprocessed cotton candy is gently pressed into the wet shell such that the lower surface is completely covered by chocolate mass. Immediately thereafter, tempered bottom mass is deposited, preferably by dot depositing. The bottom can be realized either by means of scraping or gentle horizontal vibration.

The cotton candy layer must be completely covered by chocolate. Delamination must not occur.

Features: The product generates extreme mouthfeel sensations: (1) On the one hand a very tender and smooth perception due to chocolate share compared with comparable recipes without sugar replacement by cotton candy (2) on the other hand a crunchy or chewy perception due to the texture of the pure cotton candy (3) particular experiences (some firmness when biting) during snapping off. Consumers with dentures should avoid this product and switch to Example 4 as an alternative.

### Example 7

### Product "Window"

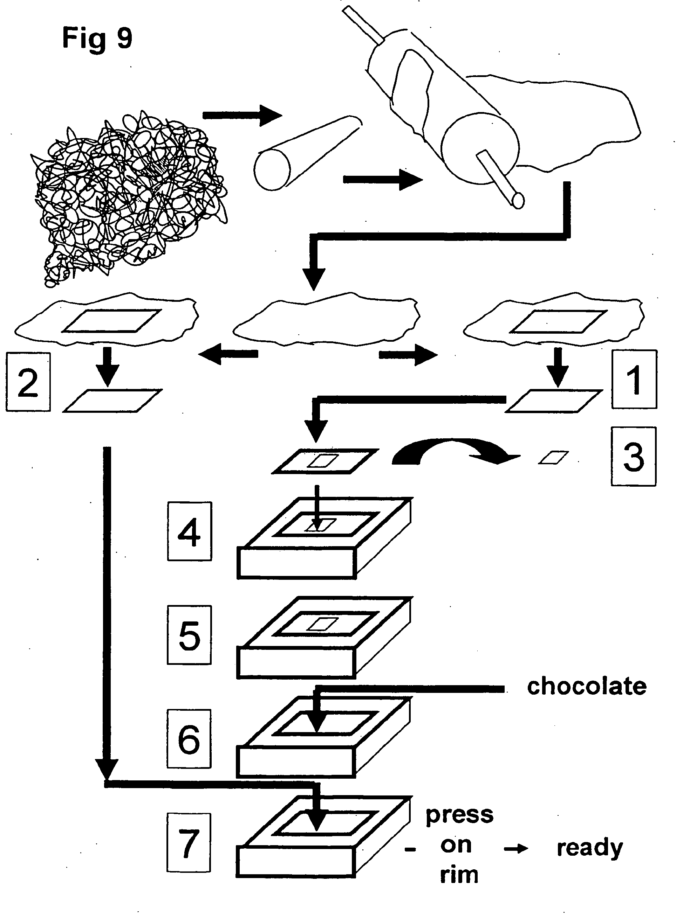

The product "Window" consists of one of the described masses, see recipe example modification 1 or 2, and two pieces of the processed candy cotton, see Fig. 9.

Preparation: According to recipe shares (tempered chocolate, containing reduced sugar share, and prepared shaped cotton candy) both components are processed separately in the following manner. Unlike Example 3, the following procedure requires multiple weighing steps to ensure share ratios as defined by the recipe. Weighing steps are not displayed in Fig. 9. Referring to Fig. 9, the piece of preprocessed cotton candy, step 1, Fig. 9, a user-defined shape is cut out of the mat, step 3, Fig. 9. Referring to step 4, Fig. 9, the piece of preprocessed cotton candy is gently pressed into a cavity of the empty mould with positive-locking. The overlapping rim is removed by cutting, step 2, Fig. 9. The mat of processed cotton candy is closely attached to the inside of the negative shape of the mould segment. Immediately thereafter, tempered chocolate mass is deposited, prefereably by dot depositing, into the mould's cavity covered by the mat of cotton candy. To get an even distribution, the filled mould may pass through a horizontal vibration step, not shown in Fig. 9. Immediately thereafter, a prepared mat of cotton candy is gently placed on the chocolate surface. The mat is pressed gently along the inside flange of the cavity covered by a mat of cotton candy. All overlapping material is cut out, not shown in Fig. 9. The process step after closing the top surface completely is cooling. Product demoulding must be carried out carefully without harming the brittle body of the product.

Features: The purpose of the product design is to deliver a product which covers most of the chocolate surface with coating based on a recipe component share. Based on that idea, chocolate becomes partly resistant to heat damage both as a wrapped and unwrapped product. Cotton-candy-based material is hygroscopic and brittle. For that reason, appropriate primary packaging including protection gas is required to maintain the texture of the cover and to avoid its separation, crumbling or disappearing. Use of primary packaging with re-closure feature may combine a preference to using small portion sizes and a need for a limited quantity in one packaging unit. The heat-resistance behavior under such conditions would last for a limited period of time only, e.g. a few hours. The chocolate surface not covered with cotton candy can optionally be given a separate cover for several purposes, e.g. decoration, surface protection.

### Example 8

### Product "Big balls"

The product "Big balls" consists of one of the described masses, see recipe example modification 1 or 2, and two pieces of the processed cotton candy.

Preparation: According to recipe shares (tempered chocolate, containing reduced sugar share, and prepared shaped cotton candy), both components are processed separately in the following manner. Unlike Example 3, the following procedure requires at least two weighing steps to ensure share ratios as defined by the recipe. Firstly, cotton candy material is portioned into pieces (cubed) with a target weight. In a shaping step, pieces of cotton candy are converted into pieces with ball-like shape. These balls are deposited evenly into the empty cavity of the mould. Secondly, tempered chocolate, either modification 1 or 2, is used to fill the space between already deposited cotton candy balls and the cavity of the mould. All balls should be completely covered by chocolate. Gentle vibration is applied. The step after achieving the final product weight is cooling.

Features: The product generates two extreme mouthfeel sensations: On the one hand a very tender and smooth perception due to chocolate share and on the other hand a crunchy or chewy perception due to the texture of the balls of cotton candy. Small bits of cotton candy remain which can easily dissolve between the tongue and the roof of the mouth during consumption. Unlike Example 5, there is no special need for snapping off. Consumers with dentures can eat this product easily.
The product concept can be used to mimic products with whole hazelnuts.

## Claims

1. Chocolate confectionery comprising spun cotton candy, wherein the chocolate confectionery is completely or partly covered with a layer of spun cotton candy or wherein the chocolate confectionery contains the spun cotton candy as a separate filling layer, as individual flat pieces or as separate little balls.

2. Chocolate confectionery according to claim 1, wherein part of the confection sugar is replaced by spun cotton candy.

3. Chocolate confectionery according to claim 2, wherein spun cotton candy is evenly distributed within the chocolate confectionery.

4. Chocolate confectionery according to claims 1 to 3, wherein the chocolate confectionery is a chocolate tablet, a chocolate bar or a praline containing a creamy filling.

5. Chocolate confectionery according to claims 3 and 4, wherein the chocolate tablet consists of a first chocolate layer according to claims 3 and 4 and a second chocolate layer of regular chocolate mass containing no spun cotton candy.

6. Chocolate confectionery according to claims 1 and 4, wherein the spun cotton candy covers only a margin of the top and all of the remainder of the chocolate tablet, leaving a window on the top of the chocolate tablet.

7. Process for producing chocolate confectionery, **characterized in that** tempered chocolate mass is combined with spun cotton candy wherein the tempered chocolate mass is completely or partly covered with a layer of spun cotton candy or wherein the spun cotton candy is incorporated into the tempered chocolate mass as a separate filling layer, as individual flat pieces or as separate little balls.

8. Process according to claim 7, wherein the tempered chocolate may have a reduced confection sugar content.

9. Process according to claim 8, wherein the confection sugar content is reduced by no more than 40% by weight.

10. Process according to any one of claims 7 to 9, wherein spun cotton candy is evenly distributed within the tempered chocolate mass.

11. Process according to any one of claims 7 to 10, wherein the tempered chocolate mass containing the spun cotton candy is formed into a chocolate tablet, a chocolate bar or a praline containing a creamy filling.

12. Process according to claims 7 to 10 and 11, wherein a first chocolate tablet layer is prepared which contains spun cotton candy and which is then combined with a second chocolate tablet layer which contains no spun cotton candy.

13. Process according to claims 7 to 9 and 11, wherein a margin of the top of the chocolate tablet and all of the remainder of the chocolate tablet is covered with a layer of spun cotton candy forming a window on the top of the chocolate tablet.

## Patentansprüche

1. Schokoladenware, die Zuckerwatte enthält, wobei die Schokoladenware vollständig oder teilweise mit einer Schicht aus Zuckerwatte bedeckt ist oder wobei die Schokoladenware die Zuckerwatte als eine separate Füllungsschicht, als einzelne flache Stücke oder als separate kleine Kügelchen enthält.

2. Schokoladenware gemäß Anspruch 1, bei der ein Teil des Zuckers der Süßware durch Zuckerwatte ersetzt ist.

3. Schokoladenware gemäß Anspruch 2, wobei die Zuckerwatte gleichmäßig innerhalb der Schokoladenware verteilt ist.

4. Schokoladenware gemäß den Ansprüchen 1 bis 3, wobei die Schokoladenware eine Schokoladentafel, ein Schokoladenriegel oder eine Praline mit Cremefüllung ist.

5. Schokoladenware gemäß den Ansprüchen 3 und 4, wobei die Schokoladentafel aus einer ersten Schokoladenschicht gemäß den Ansprüchen 3 und 4 und einer zweiten Schokoladenschicht aus gewöhnlicher Schokoladenmasse, die keine Zuckerwatte enthält, besteht.

6. Schokoladenware gemäß den Ansprüchen 1 und 4, wobei die Zuckerwatte nur einen Teil der Oberseite und den gesamten Rest der Schokoladentafel bedeckt, so dass auf der Oberseite der Schokoladentafel ein Fenster verbleibt.

7. Verfahren zur Herstellung von Schokoladenware, **dadurch gekennzeichnet, dass** temperierte Schokoladenmasse mit Zuckerwatte vereint wird, wobei die temperierte Schokoladenmasse vollständig oder teilweise mit einer Schicht Zuckerwatte bedeckt wird oder wobei die Zuckerwatte als eine separate Füllungsschicht, als einzelne flache Stücke oder als separate kleine Kügelchen in die temperierte Schokoladenmasse eingebracht wird.

8. Verfahren gemäß Anspruch 7, wobei die temperierte Schokolade einen verringerten Süßwarenzuckergehalt besitzen kann.

9. Verfahren gemäß Anspruch 8, wobei der Süßwarenzuckergehalt um nicht mehr als 40 Gew.-% verringert wird.

10. Verfahren gemäß irgendeinem der Ansprüche 7 bis 9, wobei die Zuckerwatte gleichmäßig innerhalb der temperierten Schokoladenmasse verteilt ist.

11. Verfahren gemäß irgendeinem der Ansprüche 7 bis 10, wobei die temperierte Schokoladenmasse, welche die Zuckerwatte enthält, zu einer Schokoladentafel, einem Schokoladenriegel oder einer Praline mit Cremefüllung geformt wird.

12. Verfahren gemäß den Ansprüchen 7 bis 10 und 11, wobei eine erste Schokoladentafelschicht hergestellt wird, die Zuckerwatte enthält, und die dann mit einer zweiten Schokoladentafelschicht vereint wird, die keine Zuckerwatte enthält.

13. Verfahren gemäß den Ansprüchen 7 bis 9 und 11, wobei ein Teil der Oberseite der Schokoladentafel und der gesamte Rest der Schokoladentafel mit einer Schicht aus Zuckerwatte bedeckt wird, so dass auf der Oberseite der Schokoladentafel ein Fenster verbleibt.

## Revendications

1. Confiserie au chocolat comprenant du sucre en filaments, dans lequel la confiserie au chocolat est complètement ou partiellement recouverte avec une couche de sucre en filaments ou dans laquelle la confiserie au chocolat contient le sucre en filaments en tant que couche de remplissage séparée, en tant que pièces plates individuelles ou en tant que petites billes séparées.

2. Confiserie au chocolat selon la revendication 1, dans laquelle une partie du sucre de confiserie est remplacée par du sucre en filaments.

3. Confiserie au chocolat selon la revendication 2, dans laquelle le sucre en filaments est réparti de manière régulière dans la confiserie au chocolat.

4. Confiserie au chocolat selon les revendications 1 à 3, dans laquelle la confiserie au chocolat est une plaque de chocolat, une barre de chocolat ou un praliné contenant une garniture crémeuse.

5. Confiserie au chocolat selon les revendications 3 et 4, dans laquelle la plaque de chocolat se compose d'une première couche de chocolat selon les revendications 3 et 4 et une seconde couche de chocolat de masse de chocolat régulière ne contenant pas de sucre en filaments.

6. Confiserie au chocolat selon les revendications 1 et 4, dans laquelle le sucre en filaments recouvre uniquement une marge de la partie supérieure et tout le reste de la plaque de chocolat, laissant une fenêtre sur la partie supérieure de la plaque de chocolat.

7. Procédé pour produire une confiserie au chocolat, **caractérisé en ce que** la masse de chocolat tiède est combinée avec du sucre en filaments dans laquelle la masse de chocolat tiède est complètement ou partiellement recouverte avec une couche de sucre en filaments ou dans laquelle le sucre en filaments est incorporé dans la masse de chocolat tiède en tant que couche de remplissage séparée, en tant que pièces plates individuelles ou en tant que petites billes séparées.

8. Procédé selon la revendication 7, dans lequel le chocolat tiède peut avoir une teneur en sucre de confiserie réduite.

9. Procédé selon la revendication 8, dans lequel la teneur en sucre de confiserie est réduite selon une quantité non supérieure à 40 % en poids.

10. Procédé selon l'une quelconque des revendications 7 à 9, dans lequel le sucre en filaments est régulièrement réparti dans la masse de chocolat tiède.

11. Procédé selon l'une quelconque des revendications 7 à 10, dans lequel la masse de chocolat tiède contenant le sucre en filaments est formée selon une plaque de chocolat, une barre de chocolat ou un praliné comprenant une garniture crémeuse.

12. Procédé selon les revendications 7 à 10 et 11, dans lequel on prépare une première couche de plaque de chocolat qui contient du sucre en filaments et qui est combinée avec une seconde couche de plaque de chocolat qui ne contient pas de sucre en filaments.

13. Procédé selon les revendications 7 à 9 et 11, dans lequel une marge de la partie supérieure de la plaque de chocolat et tout le reste de la plaque de chocolat sont recouverts avec une couche de sucre en filaments formant une fenêtre sur la partie supérieure de la plaque de chocolat.
